(19) Europäisches Patentamt
European Patent Office
Office européen des brevets

(11) **EP 2 453 220 A1**

(12) **DEMANDE DE BREVET EUROPEEN**

(43) Date de publication:
**16.05.2012 Bulletin 2012/20**

(51) Int Cl.:
***G01N 1/40*** *(2006.01)* ***B01L 3/00*** *(2006.01)*

(21) Numéro de dépôt: **11188179.3**

(22) Date de dépôt: **08.11.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **10.11.2010 FR 1059293**

(71) Demandeur: **Commissariat à l'Énergie Atomique et aux Énergies Alternatives
75015 Paris (FR)**

(72) Inventeur: **Rival, Arnaud
38140 CHARNECLES (FR)**

(74) Mandataire: **Augarde, Eric
Brevalex
56, boulevard de l'Embouchure
B.P. 27519
31075 Toulouse Cedex 2 (FR)**

(54) **PROCÉDÉ D'ÉVAPORATION CONTRÔLÉE D'UNE GOUTTE LIQUIDE DANS UN DISPOSITIF MICROFLUIDIQUE**

(57) L'invention porte sur un procédé d'évaporation contrôlée d'une goutte (2) liquide dans un dispositif microfluidique (1) de type fermé ou confiné, permettant l'augmentation de la concentration en analytes éventuellement présents dans la goutte (2).

Selon l'invention, on amène une goutte (2) et/ou une bulle (4) au contact l'une de l'autre, ledit contact permettant l'évaporation de la goutte (2) dans la bulle (4).

FIG.4

**Description**

**DOMAINE TECHNIQUE**

La présente invention concerne le domaine général de la préparation d'échantillons liquides dans un dispositif microfluidique, en vue d'applications chimiques et/ou biologiques.

L'échantillon liquide se présente sous la forme d'une goutte et est situé dans un dispositif microfluidique de type fermé ou confiné. Plus précisément, la goutte est située entre deux parois du dispositif et est entourée d'un liquide non miscible avec elle.

L'invention porte sur un procédé d'évaporation contrôlée d'une goutte de liquide située dans un tel dispositif microfluidique.

La goutte peut comprendre des analytes, par exemple des particules chimiques et/ou biologiques, telles que des macromolécules, des cellules, des organites, des pathogènes, voire des intercalants.

Lorsque tel est le cas, l'invention porte également sur un procédé d'augmentation de la concentration en analytes dans la goutte.

**ÉTAT DE LA TECHNIQUE ANTÉRIEURE**

Dans de nombreux domaines, il est fréquent de chercher à analyser des échantillons liquides, notamment dans le but de connaître la concentration en analytes qu'ils peuvent éventuellement contenir.

C'est le cas notamment du domaine du diagnostic, du suivi agroalimentaire ou de la surveillance de l'environnement.

Pour cela, des dispositifs microfluidiques du type laboratoire sur puce (« *Lab-on-Chip* » en anglais) peuvent être utilisés, qui permettent de manipuler efficacement de faibles volumes de liquide.

Il est ainsi possible de réaliser sur un même support d'un dispositif microfluidique toutes les étapes d'analyse d'un échantillon liquide en un temps relativement court et en utilisant de petits volumes d'échantillon et de réactif.

Ces étapes d'analyse comportent souvent, préalablement à la détection des analytes et à la mesure de leur concentration dans la goutte, une étape d'augmentation de la concentration en analytes pour permettre une détection efficace et précise par les moyens d'analyses courants.

A titre illustratif, le document FR 2 887 983, déposé au nom de la demanderesse, décrit un dispositif microfluidique et un procédé permettant d'augmenter la concentration en analytes présents dans un échantillon liquide.

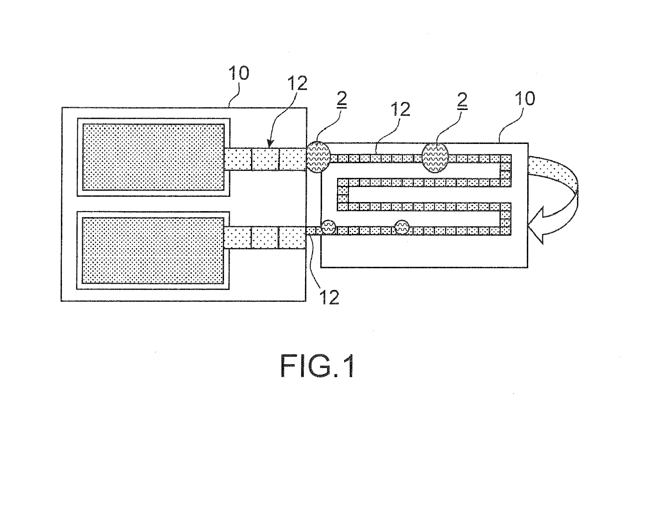

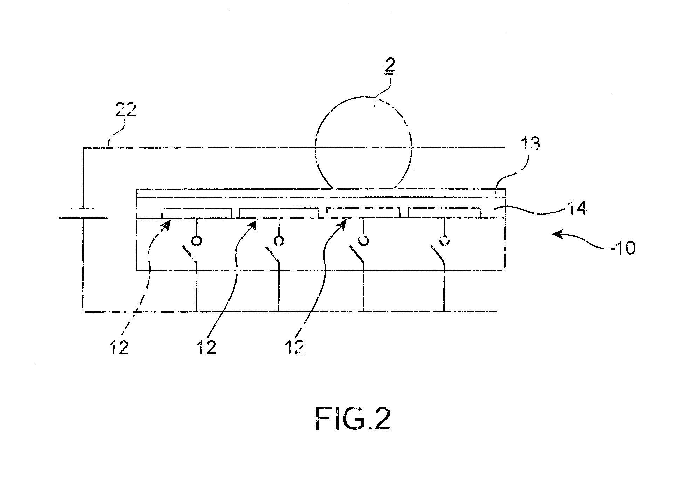

Comme le montrent les Figures 1 et 2, ce dispositif microfluidique comprend un substrat 10 sur lequel repose un échantillon liquide sous forme de goutte 2. La goutte 2 comporte des analytes en une première concentration. On cherche à évaporer la goutte 2 pour en diminuer le volume, augmentant ainsi la concentration en analytes. La détection et l'analyse des analytes en sont améliorées.

Le substrat 10 est muni d'une matrice d'électrodes 12 indépendantes et la goutte 2 est en contact avec une contre-électrode 22 suspendue au-dessus du substrat 10 (Figure 2). Elle est séparée des électrodes 12 par une couche diélectrique 14 recouverte d'une couche hydrophobe 13. La goutte 2 est, par ailleurs, entourée de gaz.

Par l'actionnement successif des électrodes 12, on déplace la goutte 2 par électromouillage sur le substrat 10, c'est-à-dire en modifiant l'angle de mouillage de la goutte 2 du fait de l'application d'un champ électrique entre la matrice d'électrodes 12 et la contre-électrode 22.

Lors de son déplacement sur le substrat 10, la goutte 2 s'évapore dans le gaz environnant, avec une vitesse d'évaporation plus importante que lorsque la goutte 2 reste immobile sur le substrat 10.

On diminue ainsi le volume de la goutte par évaporation.

Lorsque la goutte comprend des analytes, la concentration en analytes augmente à mesure que le volume de la goutte diminue.

Il est à noter que ce dispositif microfluidique est un dispositif dit « ouvert » dans la mesure où la goutte repose sur un seul substrat et est entourée de gaz et non de liquide.

Il se distingue ainsi des dispositifs du type « fermé » ou « confiné » dans lesquels la goutte est située voire confinée entre deux parois parallèles et entourée d'un liquide non miscible avec le liquide de la goutte.

Par goutte confinée entre deux parois, on entend une goutte au contact desdites parois. Elle peut présenter une épaisseur, définie par la distance entre les parois, plus faible que son diamètre.

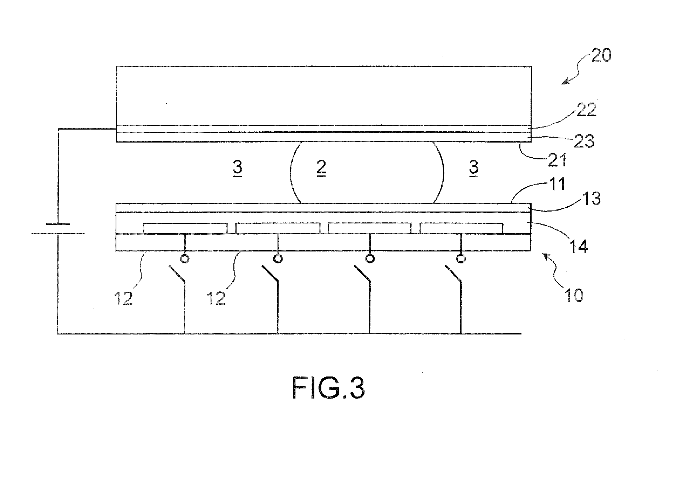

La Figure 3 illustre un exemple de dispositif microfluidique de type fermé ou confiné.

La goutte 2 est confinée entre deux parois 11, 21 parallèles hydrophobes. Ces parois 11, 21 sont formées par les surfaces d'un substrat inférieur 10 et d'un substrat supérieur 20 disposés en vis-à-vis.

Le substrat inférieur 10 est similaire ou identique à celui du dispositif décrit sur la Figure 2. Il est muni d'une matrice d'électrodes 12 activables de manière indépendante. La matrice d'électrodes 12 est recouverte d'une couche diélectrique 14 et d'une première couche hydrophobe 13. Le substrat supérieur 20 comprend une contre-électrode 22 recouverte par une seconde couche hydrophobe 23.

La goutte 2 est entourée d'un liquide 3 environnant non miscible avec le liquide de la goutte 2.

Le principe de déplacement de la goutte est ici identique à celui décrit précédemment en référence au dispositif microfluidique de type ouvert.

D'autres exemples de dispositifs microfluidiques de type fermé ou confiné peuvent être trouvés dans l'article de Pollack et al. intitulé « Electrowetting-based actuation of droplets for integrated microfluics », Lab Chip, 2002, 2 (1), 96-101.

Il apparaît que le procédé de diminution du volume par évaporation de la goutte et donc d'augmentation de la concentration en analytes éventuellement présents dans la goutte tel que décrit précédemment n'est pas envisageable dans un dispositif microfluidique du type fermé ou confiné.

En effet, dans un tel dispositif, la goutte est environnée d'un liquide non miscible, par exemple de l'huile silicone, qui empêche toute évaporation de la goutte, et donc toute diminution contrôlée de son volume.

## EXPOSÉ DE L'INVENTION

L'invention a pour but de présenter un procédé d'évaporation contrôlée d'une goutte liquide située dans un dispositif microfluidique de type fermé ou confiné.

Pour ce faire, l'invention a pour objet un procédé d'évaporation contrôlée d'une goutte d'un premier liquide, ladite goutte étant située entre deux parois d'un dispositif microfluidique et entourée d'un second liquide non miscible avec le premier liquide.

Selon l'invention, on amène ladite goutte et/ou une bulle présente entre lesdites parois au contact l'une de l'autre, ledit contact permettant l'évaporation de la goutte dans la bulle.

Par évaporation, on entend ici la transformation spontanée de la phase liquide de la goutte en phase gazeuse dans la bulle. On peut donc parler d'évaporation spontanée.

Ainsi, dans le cadre de la présente invention, le gaz de la bulle présente une pression partielle de vapeur du premier liquide sensiblement inférieure à la pression de vapeur saturante de celui-ci, de sorte que lorsque la goutte et la bulle sont au contact l'une de l'autre, il y a évaporation spontanée du premier liquide dans la bulle.

Il est à noter que le contact entre la bulle et la goutte peut être direct, c'est-à-dire que la bulle et la goutte forment entre elles une interface délimitant le premier liquide et le gaz. Le liquide de la goutte est alors directement au contact de la bulle.

Le contact entre la bulle et la goutte peut ne pas être direct, en ce sens qu'un mince film de second liquide est présent entre la bulle et la goutte. Cependant, l'épaisseur minimale de ce film de second liquide entre l'interface « bulle / second liquide » et l'interface « goutte / second liquide » est suffisamment faible pour ne pas empêcher l'évaporation spontanée du premier liquide de la goutte dans la bulle. L'épaisseur minimale de ce film de second liquide est de l'ordre de grandeur, ou inférieure, à la longueur moyenne de diffusion des molécules du premier liquide de la goutte dans le second liquide. Ainsi, l'évaporation spontanée est effective malgré la présence de ce film de second liquide.

L'invention porte également sur un procédé d'augmentation de la concentration en analytes présents dans une goutte d'un premier liquide, ladite goutte étant située entre deux parois d'un dispositif microfluidique et entourée d'un second liquide non miscible avec le premier liquide.

Selon l'invention, on met en oeuvre le procédé d'évaporation contrôlée de ladite goutte selon la caractéristique précédente, la diminution du volume de la goutte par évaporation entraînant l'augmentation de la concentration en analytes dans cette dernière.

Lors de l'évaporation de la goutte dans la bulle, on mesure avantageusement le volume de la goutte.

Lors de l'évaporation de la goutte dans la bulle, on éloigne avantageusement la goutte et/ou la bulle l'une de l'autre de manière à arrêter l'évaporation de la goutte dans la bulle, lorsque la goutte présente un volume déterminé inférieur au volume initial.

Par volume initial, on entend le volume de la goutte avant l'étape d'évaporation.

Lors de l'évaporation de la goutte dans la bulle, on peut chauffer la bulle et éventuellement la goutte, de manière à augmenter la vitesse d'évaporation de la goutte dans la bulle.

Par vitesse d'évaporation, on entend la quantité de premier liquide de la goutte évaporée dans la bulle par unité de temps.

On peut porter la bulle et éventuellement la goutte à une température comprise entre 50°C et la température d'ébullition du premier liquide de la goutte, de préférence entre 70°C et 95°C.

Selon un premier mode de réalisation de l'invention, on amène la goutte au contact de la bulle par électromouillage sous l'effet d'une commande électrique.

Les premier et second liquides sont alors l'un électriquement conducteur et l'autre diélectrique. De préférence, le premier liquide est électriquement conducteur et le second liquide est diélectrique.

Selon un second mode de réalisation de l'invention, on amène ladite goutte au contact de la bulle par diélectrophorèse liquide sous l'effet d'une commande électrique.

Les premier et second liquides présentent alors des coefficients diélectriques différents l'un de l'autre.

Selon un troisième mode de réalisation de l'invention, on amène ladite bulle au contact de la goutte par dilatation thermique de la bulle, en chauffant celle-ci.

Ultérieurement à l'étape d'évaporation, on peut évacuer la bulle hors de l'espace délimité par lesdites parois au-travers d'un orifice pratiqué au niveau de l'une ou l'autre desdites parois.

Préalablement à l'étape d'évaporation, on peut introduire la bulle entre lesdites parois par un orifice pratiqué au niveau de l'une ou l'autre desdites parois.

L'invention porte également sur un dispositif microfluidique comprenant deux parois entre lesquelles est située une goutte d'un premier liquide entourée d'un second liquide non miscible avec le premier liquide.

Selon l'invention, il comporte des moyens de déplacement de ladite goutte et/ou d'une bulle présente entre lesdites parois, lesdits moyens de déplacement étant aptes à amener ladite bulle et/ou ladite goutte au contact l'une de l'autre, ledit contact permettant l'évaporation de la goutte dans la bulle.

De préférence, les moyens de déplacement de ladite bulle et/ou ladite goutte sont aptes à éloigner la goutte et/ou la bulle l'une de l'autre de manière à arrêter l'évaporation de la goutte dans la bulle.

Avantageusement, le dispositif microfluidique comporte des moyens de mesure du volume de la goutte.

Il comporte, de préférence, des moyens de chauffage de la bulle et éventuellement de la goutte, de manière à augmenter la vitesse d'évaporation lors de l'évaporation de la goutte dans la bulle.

Lesdits moyens de chauffage peuvent comprendre une résistance électrique disposée à proximité de la bulle et éventuellement de la goutte, et/ou des moyens d'émission d'un rayonnement électromagnétique.

Les moyens de déplacement de ladite bulle et/ou ladite goutte peuvent comprendre des moyens électriques de déplacement de la goutte par électromouillage ou par diélectrophorèse liquide.

Les moyens de déplacement de ladite bulle et/ou ladite goutte peuvent alternativement comprendre des moyens de chauffage de la bulle de manière à assurer la dilatation thermique de la bulle.

Le dispositif microfluidique peut également comporter des moyens d'introduction et/ou d'évacuation de la bulle au-travers de l'une ou l'autre desdites parois.

D'autres avantages et caractéristiques de l'invention apparaîtront dans la description détaillée non limitative ci-dessous.

## BRÈVE DESCRIPTION DES DESSINS

On décrira à présent, à titre d'exemples non limitatifs, des modes de réalisation de l'invention, en se référant aux dessins annexés, dans lesquels .

La Figure 1, déjà décrite, est une représentation schématique en vue de dessus d'un dispositif microfluidique de type ouvert selon l'art antérieur, permettant de diminuer le volume d'une goutte par évaporation ;

La Figure 2, déjà décrite, est une vue partielle en coupe longitudinale du dispositif microfluidique du type ouvert représenté sur la Figure 1 ;

La Figure 3, déjà décrite, est une représentation schématique en coupe longitudinale d'un dispositif microfluidique de type fermé ou confiné selon l'art antérieur ;

La Figure 4 est une représentation schématique en coupe longitudinale d'une partie du dispositif microfluidique de type fermé ou confiné selon un mode de réalisation de l'invention ;

La Figure 5 est une vue de dessus du dispositif microfluidique représenté sur la Figure 4 ; et

Les Figures 6 à 8 sont des vues partielles et de dessus du dispositif microfluidique selon un autre mode de réalisation de l'invention, illustrant le déplacement par dilatation thermique de la bulle vers la goutte, pour trois instants différents.

## EXPOSÉ DÉTAILLÉ D'UN MODE DE RÉALISATION PRÉFÉRÉ

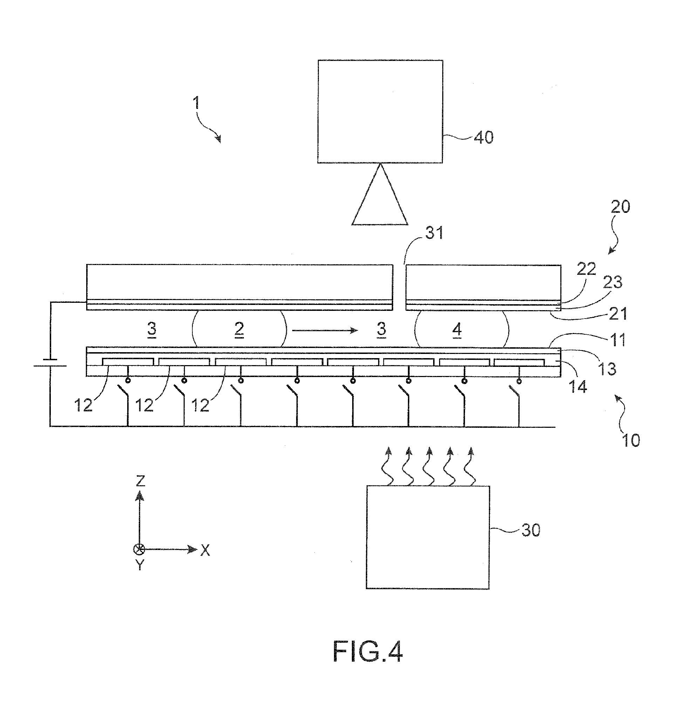

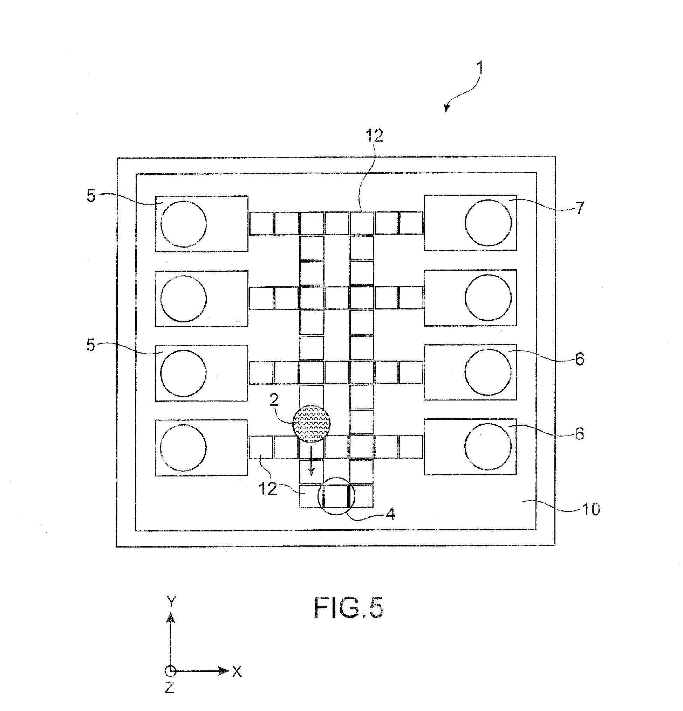

Sur les Figures 4 et 5 est représenté un dispositif microfluidique 1 permettant l'évaporation contrôlée d'une goutte et l'augmentation de la concentration en analytes éventuellement présents dans la goutte selon un premier mode de réalisation de l'invention.

Il est à noter que les échelles ne sont pas respectées, pour privilégier la clarté du dessin.

Dans la description qui va suivre, les verbes « recouvrir », « être situé sur » et « être disposé sur » n'impliquent pas ici nécessairement de contact direct. Ainsi, un matériau ou un liquide peut être disposé sur une paroi sans qu'il y ait de contact direct entre le matériau et la paroi. Un matériau intermédiaire peut ainsi être présent. Le contact direct est réalisé lorsque le qualificatif « directement » est utilisé avec les verbes précédemment cités.

Le dispositif microfluidique 1 selon l'invention comprend deux parois 11, 21 entre lesquelles sont situées, voire confinées, une goutte 2 d'un premier liquide et une bulle 4 de gaz.

Dans toute la description qui va suivre, par convention, on utilise un repère orthonormé direct en coordonnées cartésiennes (X,Y,Z) présenté sur la Figure 1. Le plan (X,Y) est parallèle auxdites parois 11, 21 et la direction Z est de manière orthogonale aux parois 11, 21.

Les termes « inférieur » et « supérieur » sont ici à comprendre en termes d'orientation suivant la direction Z dudit repère.

La goutte 2 et la bulle 4 sont dites confinées lorsqu'elles sont chacune au contact des deux parois 11, 21 simultanément. Elles peuvent présenter une épaisseur sensiblement supérieure à leur diamètre. L'épaisseur de la goutte 2 et de la bulle 4 est ici définie par la distance entre les deux parois 11, 21.

La goutte 2 et la bulle 4 sont environnées d'un second liquide 3 non miscible avec le premier liquide.

L'espace délimité par lesdites parois 11, 21 est ainsi rempli de second liquide 3 et comprend la goutte 2 et la bulle 4.

Le dispositif microfluidique 1 comprend des moyens de déplacement de la bulle 4 et/ou de la goutte 2 aptes à amener la bulle 4 et/ou la goutte 2 au contact l'une de l'autre, ledit contact permettant l'évaporation de la goutte 2 dans la bulle 4.

Selon le mode de réalisation représenté sur les Figures 4 et 5, ces moyens de déplacement assurent le déplacement de la goutte 2 vers la bulle 4 par électromouillage, plus précisément par électromouillage sur diélectrique (EWOD en anglais, pour « *Electrowetting on dielectric* »).

Le dispositif microfluidique 1 comprend un substrat inférieur 10 et un substrat supérieur 20 formant capot, disposés en regard l'un de l'autre.

Le substrat inférieur 10 comporte une matrice d'électrodes 12 qui peuvent être actionnées indépendamment les unes des autres.

La matrice d'électrodes 12 est recouverte d'une couche diélectrique 14 et d'une couche hydrophobe 13. La surface libre de la couche hydrophobe 13 forme une paroi 11 parmi les deux parois 11, 21 du dispositif microfluidique 1.

Le capot 20 comprend une contre-électrode 22 recouverte d'une seconde couche hydrophobe 23. La surface libre de la seconde couche hydrophobe 23 forme la seconde paroi 21 parmi les deux parois 11, 21 du dispositif microfluidique 1.

Le caractère hydrophobe des couches hydrophobes 13, 23 signifie que la goutte 2 présente au repos, c'est-à-dire lorsque l'électrode 12 située en-dessous de la goutte 2 n'est pas activée, un angle de contact, sur ces couches, supérieur à 90°.

Le premier liquide de la goutte 2 est électriquement conducteur et le second liquide 3 est diélectrique. La goutte 2 forme avec ce liquide 3 une interface.

Les électrodes 12 et la contre-électrode 22 sont connectées à une source de tension permettant d'appliquer une tension U entre les électrodes.

Lorsque l'électrode 12 située en regard de l'interface est activée, à l'aide de moyens de commutation dont la fermeture établit un contact entre cette électrode 12 et la source de tension via un conducteur commun, l'ensemble goutte 2 sous tension, couche diélectrique 14 et électrode 12 activée agit comme une capacité.

Comme indiqué dans l'article de Berge intitulé « Electrocapillarité et mouillage de films isolants par l'eau », C.R. Acad. Sci., 317, série 2, 1993, 157-163, l'angle de contact θ de l'interface du liquide s'exprime selon la relation :

$$\cos\theta(U) = \cos\theta(0) + \frac{\varepsilon_r}{2e\sigma}U^2$$

où e est l'épaisseur de la couche diélectrique 14, $\varepsilon_r$ la permittivité de cette couche 14 et σ la tension de surface de l'interface du premier liquide.

Lorsque la tension de polarisation U est alternative, le premier liquide se comporte comme un conducteur dans la mesure où la fréquence de la tension de polarisation est sensiblement inférieure à une fréquence de coupure. Cette dernière, qui dépend notamment de la conductivité électrique du liquide, est typiquement de l'ordre de quelques dizaines de kilohertz (voir par exemple l'article de Mugele et Baret intitulé « *Electrowetting: from basics to applications* », J. Phys. Condens. Matter, 17 (2005), R705-R774). D'autre part, la fréquence est de préférence sensiblement supérieure à la fréquence correspondant au temps de réponse hydrodynamique du liquide, qui dépend des paramètres physiques comme la tension de surface, la viscosité ou la distance entre les deux parois 11, 21, et qui est de l'ordre de quelques dizaines ou centaines de Hertz. La réponse du liquide dépend alors de la valeur efficace de la tension, puisque l'angle de contact dépend de la tension en $U^2$, selon la relation précédente.

Il apparaît alors une pression électrostatique agissant sur l'interface, à proximité de la ligne de contact, comme l'explique l'article de Bavière et al. intitulé « Dynamics of droplet transport induced by electrowetting actuation », Microfluid Nanofluid, 4, 2008, 287-294. La goutte 2 peut alors être déplacée de proche en proche, sur la surface hydrophobe 13, par activation successive des électrodes 12 jusqu'à la bulle 4.

Il est à noter que la bulle 4 n'est sensiblement pas affectée par le déplacement de la goutte 2 et reste sensiblement immobile.

La manipulation de la goutte 2 se situe dans un plan, les électrodes 12 pouvant en effet être disposées de manière linéaire, mais aussi en deux dimensions, définissant ainsi un plan de déplacement pour la goutte (Figure 5). Les électrodes 12 forment ainsi un chemin fluidique qui relie des réservoirs 5 d'échantillon liquide, des réservoirs 6 de réactif, et des puits 7 d'évacuation de goutte.

Le dispositif microfluidique 1 comprend des moyens de chauffage 30 de la bulle 4, et éventuellement de la goutte 2, dans le but d'augmenter la température du gaz de la bulle 4 et éventuellement du premier liquide de la goutte 2, lorsque cette dernière est au contact de la bulle 4. Lorsque la bulle 4 est chauffée, la vitesse d'évaporation augmente. De plus, la quantité de premier liquide qui peut être évaporée dans la bulle 4 est augmentée, dans la mesure où la valeur de la pression de vapeur saturante est plus élevée.

Ces moyens de chauffage 30 peuvent comprendre une résistance électrique à effet Joule disposée de manière à pouvoir chauffer la bulle 4 et éventuellement la goutte 2.

Ils peuvent également comprendre un module thermo-électrique à effet Peltier.

Ces moyens de chauffage 30 peuvent être disposés au contact ou à distance de l'un ou l'autre des substrats 10, 20.

Ils peuvent également comprendre des moyens d'émission d'un rayonnement électromagnétique, par exemple dans l'infrarouge. Dans ce cas, le substrat traversé par ce rayonnement est sensiblement transparent à la longueur d'onde dudit rayonnement.

Le dispositif 1 peut également comprendre des moyens de contrôle (non représentés) permettant de mesurer la température dans la bulle et/ou dans la goutte. Il peut s'agir, par exemple, d'une sonde de température disposée au contact du substrat, de préférence à proximité de la bulle ou de la goutte, cette sonde pilotant le moyen de chauffage en fonction de la température mesurée. Le pilotage peut être de type PID (pour « Proportionnel Intégral et Dérivé »).

Le dispositif microfluidique 1 comprend des moyens de mesure 40 du volume de la goutte 2 de liquide.

Ces moyens de mesure 40 peuvent comprendre un microscope optique du type à lumière directe. La visualisation est de préférence effectuée au-travers du capot 20, celui-ci étant alors transparent.

Ces moyens de mesure 40 comprennent une unité de gestion des prises de vues et de stockage de données, pour post-traiter et analyser les séquences d'images réalisées.

Les images peuvent ainsi être numérisées en temps réel et le contour de la goutte est détecté en post-traitement à l'aide d'un logiciel de traitement d'images. Des moyens de calcul permettent ensuite de déduire le volume de la goutte.

Des moyens de commande (non représentés) permettent de commander ou d'activer les électrodes 12 une à une, par exemple un ordinateur de type PC connectés aux moyens de commutation.

Ces moyens de commande sont également connectés aux moyens de chauffage 30, aux moyens de contrôle de la température ainsi qu'aux moyens de mesure 40 du volume de la goutte.

Ainsi, l'utilisateur peut commander le déplacement de la goutte 2 jusqu'à la bulle 4, accélérer ou ralentir l'évaporation de la goutte 2 dans la bulle 4 et contrôler précisément la diminution du volume de la goutte 2. Ce contrôle est effectué en jouant sur la proximité de la goutte et de la bulle, ou sur les moyens de chauffage précédemment décrits.

Le substrat inférieur 10 ou le capot 20 peut comporter au moins un orifice 31 traversant et débouchant au niveau de l'une ou l'autre desdites parois 11, 21.

Cet orifice permet d'introduire la bulle entre les parois du dispositif, et/ou de l'en extraire.

Il peut être connecté à des moyens de génération de bulle, par exemple un réservoir de gaz et des moyens pour augmenter la pression dans le réservoir. La connexion entre le réservoir et le dispositif peut être assurée par une aiguille traversant l'orifice 31, ce dernier étant obturé par un septum.

L'orifice 31 peut également être connecté à l'air environnant le dispositif microfluidique 1 lorsqu'on souhaite extraire tout ou partie de la bulle 4.

L'orifice 31 est de préférence obturé lorsqu'on ne souhaite pas introduire ou extraire ladite bulle.

Lorsque l'orifice 31 permet l'évacuation du gaz compris dans la bulle d'air 4, il fait office d'évent. Cet orifice assure une communication entre l'espace confiné entre les deux substrats 10, 20 et le milieu extérieur au dispositif, de façon à permettre une évacuation de tout ou partie du gaz présent dans la bulle 4 à l'extérieur du dispositif.

La surface de l'orifice est suffisamment faible pour éviter que le fluide immiscible ne s'évacue. Son diamètre peut par exemple être inférieur à la longueur capillaire du liquide immiscible 3 dans le gaz constituant le milieu extérieur au dispositif. D'une façon générale, ce diamètre (ou la plus grande largeur dans le cas d'un orifice 31 non circulaire) est de préférence compris entre 100 $\mu$m et 5 mm, et encore de préférence compris entre 100 $\mu$m et 1 mm, par exemple 500 $\mu$m.

La bulle de gaz 4 peut être déplacée en vis à vis de l'orifice en étant poussée par la goutte 2, cette dernière étant déplacée par les moyens de déplacement, par exemple par électromouillage. Ainsi, la bulle 4, après avoir grossi sous l'effet de l'évaporation d'une partie de la goutte 2, peut être amenée au contact de l'orifice, jusqu'à ce que son volume se réduise.

Selon une variante, c'est l'accroissement du volume de la bulle 4, lorsqu'elle est placée au contact de la goutte 2, qui permet à la bulle de venir au contact de l'orifice 31.

On voit que la présence de l'orifice 31 est un moyen de réguler la taille de la bulle 4. Ainsi, la présence d'un tel orifice, agissant en évent, sera préférée dans l'ensemble des modes de réalisations.

Il est à noter que la bulle 4 peut également être formée lors de l'introduction préalable du second liquide 3 entre les deux parois 11, 21. Une bulle 4 peut en effet être générée au niveau d'un coin formé des deux parois 11, 21 d'une part et d'une ou deux parois latérales adjacentes d'autre part. Pour cela, avant d'introduire le second liquide 3, on réalise un vide partiel dans le dispositif, par exemple 0,1 mbar, puis on le remplit de second liquide 3, par exemple de l'huile, le remplissage étant effectué à la pression atmosphérique. Ainsi, l'huile 3 remplace le vide partiel initialement formé. Ce vide étant partiel, une bulle 4 de gaz peut se former dans un coin du dispositif.

Le substrat inférieur 10 et le capot 20 sont réalisés de préférence en matériau transparent, par exemple en verre ou en polycarbonate.

Des cales d'espacement permettent d'espacer les deux substrats 10, 20. Elles sont préférentiellement réalisées en film sec photo-imageable de type Ordyl.

L'espacement entre le substrat inférieur 10 et le substrat supérieur 20 est typiquement compris entre 10$\mu$m et 500$\mu$m, et de préférence entre 50$\mu$m et 100$\mu$m.

Les électrodes 12 et contre-électrode 22 sont réalisées par dépôt d'un matériau, de préférence transparent, par exemple de l'ITO, sur le substrat. Cette couche conductrice peut être pulvérisée ou réalisée en procédé sol-gel. Elle est ensuite gravée suivant un motif approprié, par exemple par gravure humide.

L'épaisseur des électrodes 12 est comprise entre 10nm et 1$\mu$m, de préférence 300nm. Les électrodes 12 sont de préférence carrées avec un côté dont la longueur est comprise entre quelques micromètres à quelques millimètres, de préférence entre 50$\mu$m et 1mm. La surface des électrodes 12 dépend de la taille des gouttes à transporter. L'espacement entre électrodes voisines peut être préférentiellement compris entre 1$\mu$m et 10$\mu$m.

La couche diélectrique 14 est réalisée par dépôt d'une couche de nitrure de silicium $Si_3N_4$, d'épaisseur, de manière générale comprise entre 100nm et 1$\mu$m, de préférence de 300nm. Un procédé de dépôt chimique en phase vapeur assisté par plasma *(PECVD)* est préféré au procédé de dépôt en phase vapeur à basse pression *(LPCVD)* pour des raisons thermiques. En effet, la température du substrat n'est portée qu'entre 150°C et 350°C (selon les propriétés recherchées) contre 750°C environ pour le dépôt LPCVD.

Les couches hydrophobes 13, 23 sont obtenues par dépôt par évaporation sous vide de Téflon ou de SiOC, ou de parylène, par exemple, sur les substrats inférieur 10 et supérieur 20. Ces couches 13, 23 permettent notamment de diminuer voire d'éviter les effets d'hystérésis de l'angle de mouillage. Leur épaisseur, d'une manière générale comprise entre 100nm et 5$\mu$m, est de préférence de 1$\mu$m.

L'orifice 31 d'introduction et/ou d'évacuation de la bulle peut avoir un diamètre compris entre 100$\mu$m et 2mm.

Le premier liquide est électriquement conducteur et peut être de l'eau ou un sérum physiologique.

Le second liquide est diélectrique et non miscible avec le premier liquide. Il peut être, par exemple, une huile minérale ou silicone.

La goutte et la bulle peuvent avoir un volume compris entre 0.1 nanolitre et 1 microlitre. Le gaz de la bulle peut être de l'air.

Le fonctionnement du dispositif microfluidique selon le premier mode de réalisation de l'invention est le suivant.

Comme le montre la Figure 4, une bulle 4 est présente entre les deux parois 11, 21 du dispositif microfluidique 1.

Elle peut être formée lors de l'introduction du second liquide 3 entre les parois 11, 21, ou introduite par des moyens appropriés.

Une goutte 2 est également présente entre les deux parois 11, 21. Elle est à distance de la bulle 4 et entourée du second liquide 3, de sorte qu'elle ne présente pas d'évaporation spontanée.

On déplace la goutte 2 par électromouillage en activant successivement les électrodes 12 pour l'amener au contact de la bulle 4, ledit contact permettant l'évaporation spontanée de la goutte 2 dans la bulle 4.

La goutte 2 peut ainsi être au contact direct de la bulle 4. Une partie de son interface est définie par la délimitation du premier liquide de la goutte 2 et du gaz de la bulle 4.

Au niveau de cette partie d'interface, le premier liquide de la goutte 2 s'évapore naturellement dans le gaz de la bulle 4.

Pour que l'évaporation spontanée ait lieu, le gaz de la bulle 4 présente une pression partielle de vapeur de premier liquide sensiblement inférieure à la pression de vapeur saturante de ce premier liquide.

Il est à noter qu'un mince film de second liquide 3 peut toutefois séparer la goutte 2 et la bulle 4, sans empêcher l'évaporation de la goutte 2 dans la bulle 4.

Dans ce cas, ce film présente une épaisseur minimale entre l'interface « bulle / second liquide » et l'interface « goutte / second liquide ».

Pour que l'évaporation spontanée de la goutte 2 dans la bulle 4 ait lieu malgré la présence de ce film, l'épaisseur minimale de celui-ci est de l'ordre de grandeur, ou inférieur, à la longueur moyenne de diffusion des molécules du premier liquide de la goutte 2 dans le second liquide 3.

Cette épaisseur est notamment dépendante de la température locale au niveau du film de second liquide 3 et de la goutte 2. En effet, la longueur moyenne de diffusion augmente avec la température, par agitation moléculaire.

A titre illustratif, la diffusivité moléculaire de l'eau dans de l'huile est de l'ordre de $10^{-10}m^2/s$ . Ainsi, une longueur caractéristique de diffusion des molécules de premier liquide au-travers du film de second liquide, pour un temps caractéristique de 1s, est de l'ordre de $10\mu m$.

Aussi, cette épaisseur minimale de film de second liquide 3 entre la goutte 2 et la bulle 4 peut être inférieure ou égale à $100\mu m$, par exemple comprise entre $100\mu m$ et 1nm, de préférence comprise entre $10\mu m$ et 1nm, voire entre $1\mu m$ et 1nm.

Ainsi, lorsque la goutte 2 et la bulle 4 sont au contact l'une de l'autre, avec ou sans mince film de second liquide 3, la goutte 2 s'évapore spontanément dans la bulle 4.

Il est à noter que, lors de l'étape d'évaporation, on peut chauffer la bulle 4 et éventuellement la goutte 2 de manière à la ou les porter à une température supérieure à la température ambiante. Ainsi, la vitesse d'évaporation de la goutte dans la bulle est augmentée. De plus, la quantité de premier liquide qui peut être évaporée dans la bulle 4 est plus importante puisque la valeur de la pression de vapeur saturante est également augmentée.

La température reste cependant inférieure à la température d'ébullition de la goutte 2.

Dans le cas d'une goutte 2 d'eau et d'une bulle 4 d'air, elle peut ainsi être comprise entre 25°C et 95°C, de préférence entre 50°C et 95°C, voire entre 70°C et 95°C. L'évaporation de la goutte dans la bulle est d'autant plus rapide que la température de la goutte augmente.

On mesure alors en temps réel le volume de la goutte 2. Plus précisément, on enregistre une séquence d'images de la goutte 2, on numérise ces images et on y détecte le contour de la goutte 2 par un logiciel de post-traitement. On en déduit ensuite le volume de la goutte 2.

Lorsque le volume de la goutte 2 a diminué jusqu'à une valeur déterminée, inférieure au volume initial défini avant l'étape d'évaporation, on éloigne suffisamment la goutte 2 de la bulle 4, par électromouillage, pour empêcher toute évaporation supplémentaire de la goutte 2 dans la bulle 4.

Dans le cas où la goutte 2 comprend des analytes, on augmente ainsi, par la diminution du volume de la goutte 2 par évaporation, la concentration en analytes dans la goutte 2.

Lorsque ces analytes sont marqués par un agent fluorescent, le signal de fluorescence augmente ainsi en intensité du fait de l'augmentation de la concentration en analytes dans la goutte 2. La détection des analytes est rendue plus précise.

Il est à noter que ce procédé permet d'évaporer la goutte 2 de manière contrôlée et précise, donc d'en diminuer le volume et d'augmenter la concentration en analytes éventuellement présents dans la goutte 2.

Lorsque la goutte 2 et la bulle 4 sont suffisamment éloignées l'une de l'autre pour éviter toute évaporation supplémentaire, la goutte 2 garde un volume constant. La concentration en analytes éventuellement présents est alors également constante.

Le dispositif microfluidique selon un second mode de réalisation de l'invention (non représenté) est maintenant décrit.

Ce mode de réalisation se distingue du premier mode de réalisation uniquement en ce qui concerne les moyens de déplacement de la bulle 4 et/ou de la goutte 2 au contact l'une de l'autre.

Selon ce mode de réalisation, ces moyens de déplacement sont adaptés à déplacer la goutte 2, par diélectrophorèse liquide, permettant ainsi d'amener la goutte 2 au contact de la bulle 4 et de l'en éloigner.

Le premier liquide de la goutte 2 et le second liquide 3 peuvent être électriquement conducteurs ou isolants. Ils présentent néanmoins un coefficient diélectrique différent l'un de l'autre.

Par diélectrophorèse liquide (LDEP en anglais, pour « *Liquid Dielectrophoresis* »), on entend l'application d'une force électrique sur un liquide électriquement isolant ou conducteur, ici le premier liquide de la goutte, la force étant générée par un champ électrique oscillant non uniforme.

Le premier liquide de la goutte 2 présente un coefficient diélectrique sensiblement supérieur à celui du second liquide 3.

Lorsque la goutte 2 est située dans un champ électrique, les molécules du premier liquide acquièrent un dipôle non nul et se polarisent. Dans la mesure où le champ est non uniforme, une force de Coulomb apparaît et induit le déplacement des molécules du liquide, et ainsi de toute la goutte, vers un maximum de champ.

Le substrat inférieur 10 peut comprendre, comme pour l'électromouillage, une matrice d'électrodes, suivant une ou deux dimension(s) dans le plan du substrat 10, définissant ainsi un chemin fluidique pour la goutte 2. Il peut également comprendre non pas une matrice d'électrodes, mais deux électrodes parallèles l'une avec l'autre, s'étendant suivant une ou deux dimensions et définissant alors un chemin fluidique pour la goutte 2.

Ces électrodes peuvent être recouvertes d'une couche diélectrique, selon que les premier et second liquides sont électriquement conducteurs ou non.

Une couche hydrophobe recouvre le premier substrat, définissant ainsi l'une des deux parois du dispositif microfluidique.

La seconde paroi des deux parois du dispositif est formée par la couche hydrophobe du capot. Le capot peut ne pas comprendre de contre-électrode.

La tension appliquée entre les deux électrodes parallèles du premier substrat est une tension alternative dont la fréquence est comprise entre, par exemple, quelques kilohertz et quelques mégahertz, par exemple entre 10 kHz et 10MHz, et entre 10 kHz et 100kHz, et d'une tension préférentielle de quelques volts RMS à quelques centaines de volts RMS.

Ainsi, la goutte peut être amenée au contact de la bulle, ledit contact permettant l'évaporation de la goutte dans la bulle.

Le procédé de diminution du volume de la goutte et d'augmentation de la concentration en analytes éventuellement présents dans la goutte est identique à celui décrit en référence au premier mode de réalisation.

Le dispositif microfluidique selon un troisième mode de réalisation de l'invention est maintenant décrit.

Ce mode de réalisation se distingue du premier mode de réalisation uniquement en ce qui concerne les moyens de déplacement de la bulle et/ou de la goutte au contact l'une de l'autre.

Selon ce mode de réalisation, ces moyens de déplacement (non représentés) sont adaptés à amener la bulle, par dilatation thermique de celle-ci, au contact de la goutte.

Selon ce mode de réalisation, lorsque le dispositif présente un orifice 31 agissant en tant qu'évent, la bulle d'air peut être déplacée en étant poussée par le liquide immiscible 3, lorsque ce dernier est soumis à des forces de diélectrophorèse.

Le procédé de diminution du volume de la goutte et d'augmentation de la concentration en analytes éventuellement présents dans la goutte est identique à celui décrit en référence au premier mode de réalisation.

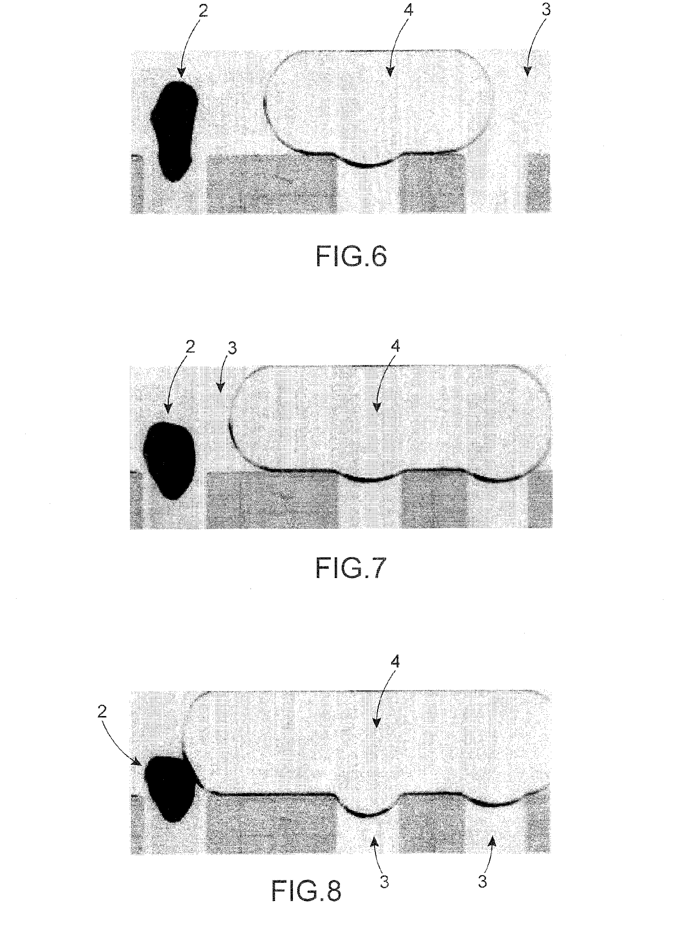

Les Figures 6 à 8 sont des vues partielles et de dessus du dispositif microfluidique, illustrant un exemple de déplacement par dilatation thermique de la bulle vers la goutte.

Ces Figures montrent une goutte 2 et une bulle 4 situées dans un second liquide 3.

La goutte 2 comprend ici des analytes marqués par un agent fluorescent. Elle est localisée sur les Figures par le signal de fluorescence qui en résulte.

Ainsi, en chauffant la bulle 4 (Figure 6), on augmente son volume et une partie de son interface se déplace en direction de la goutte 2 (Figure 7).

Il est à noter que ces moyens de déplacement ne permettent pas de déplacer l'ensemble de la bulle 4 dans une direction donnée. La vitesse barycentrique de la bulle 4 reste en effet sensiblement nulle. Par vitesse barycentrique, on entend la vitesse du barycentre de la bulle 4.

Ces moyens de déplacement peuvent comprendre une résistance électrique à effet Joule disposée de manière à pouvoir chauffer la bulle 4 et éventuellement la goutte 2.

Ils peuvent également comprendre un module thermo-électrique à effet Peltier.

Ces moyens de chauffage peuvent être disposés au contact ou à distance de l'un ou l'autre des substrats.

Ils peuvent également comprendre des moyens d'émission d'un rayonnement électromagnétique, par exemple dans l'infrarouge. Dans ce cas, le substrat traversé par ce rayonnement est sensiblement transparent à la longueur d'onde dudit rayonnement.

Le dispositif peut également comprendre des moyens de contrôle permettant de mesurer la température dans la bulle et/ou dans la goutte, par exemple une sonde de température connectée aux moyens de chauffage, telle que décrite précédemment.

Ainsi, ces moyens de déplacement permettent d'amener une partie de la bulle 4 au contact de la goutte 2 (Figure 8), ledit contact permettant l'évaporation de la goutte 2 dans la bulle 4.

On augmente ainsi, par la diminution du volume de la goutte 2 par évaporation, la concentration en analytes dans la goutte 2.

Le signal de fluorescence augmente ainsi en intensité du fait de l'augmentation de la concentration en analytes dans la goutte 2. La détection des analytes est rendue plus précise.

Bien entendu, diverses modifications peuvent être apportées par l'homme du métier à l'invention qui vient d'être décrite, uniquement à titre d'exemples non limitatifs.

**Revendications**

1. Procédé d'évaporation contrôlée d'une goutte (2) d'un premier liquide, ladite goutte (2) étant située entre deux parois (11, 21) d'un dispositif microfluidique (1) et entourée d'un second liquide (3) non miscible avec le premier liquide, **caractérisé en ce qu'**on amène ladite goutte (2) et/ou une bulle (4) présente entre lesdites parois (11, 21) au contact l'une de l'autre, ledit contact permettant l'évaporation de la goutte (2) dans la bulle (4).

**2.** Procédé d'évaporation contrôlée selon la revendication 1, **caractérisé en ce que**, lors de l'évaporation de la goutte (2) dans la bulle (4), on mesure le volume de la goutte (2).

**3.** Procédé d'évaporation contrôlée selon la revendication 2, **caractérisé en ce que**, lors de l'évaporation de la goutte (2) dans la bulle (4), on éloigne la goutte (2) et/ou la bulle (4) l'une de l'autre de manière à arrêter l'évaporation de la goutte (2) dans la bulle (4) lorsque la goutte (2) présente un volume déterminé inférieur au volume initial.

**4.** Procédé d'évaporation contrôlée selon l'une quelconque des revendications 1 à 3, **caractérisé en ce que**, lors de l'évaporation de la goutte (2) dans la bulle (4), on chauffe la bulle (4) et éventuellement la goutte (2) de manière à augmenter la vitesse d'évaporation de la goutte (2) dans la bulle (4).

**5.** Procédé d'évaporation contrôlée selon la revendication 4, **caractérisé en ce qu'**on porte la bulle (4) et éventuellement la goutte (2) à une température comprise entre 50°C et la température d'ébullition du premier liquide de la goutte (2).

**6.** Procédé d'évaporation contrôlée selon l'une quelconque des revendications 1 à 5, **caractérisé en ce qu'**on amène ladite goutte (2) au contact de la bulle (4) par électromouillage sous l'effet d'une commande électrique.

**7.** Procédé d'évaporation contrôlée selon la revendication 6, **caractérisé en ce que** les premier et second liquides sont l'un électriquement conducteur et l'autre diélectrique.

**8.** Procédé d'évaporation contrôlée selon l'une quelconque des revendications 1 à 5, **caractérisé en ce qu'**on amène ladite goutte (2) au contact de la bulle (4) par diélectrophorèse liquide sous l'effet d'une commande électrique.

**9.** Procédé d'évaporation contrôlée selon la revendication 8, **caractérisé en ce que** les premier et second liquides présentent des coefficients diélectriques différents l'un de l'autre.

**10.** Procédé d'évaporation contrôlée selon l'une quelconque des revendications 1 à 5, **caractérisé en ce qu'**on amène ladite bulle (4) au contact de la goutte (2) par dilatation thermique de la bulle (4), en chauffant celle-ci.

**11.** Procédé d'évaporation contrôlée selon l'une quelconque des revendications 1 à 10, **caractérisé en ce que**, ultérieurement à l'étape d'évaporation, on évacue la bulle (4) hors de l'espace délimité par lesdites parois (11, 21) au travers d'un orifice (31) pratiqué au niveau de l'une ou l'autre desdites parois (11, 21).

**12.** Procédé d'augmentation de la concentration en analytes présents dans une goutte (2) d'un premier liquide, ladite goutte (2) étant située entre deux parois (11, 21) d'un dispositif microfluidique (1) et entourée d'un second liquide (3) non miscible avec le premier liquide,
**caractérisé en ce qu'**on met en oeuvre le procédé d'évaporation contrôlée selon l'une des revendications précédentes pour ladite goutte (2), la diminution du volume de la goutte (2) par évaporation entraînant l'augmentation de la concentration en analytes dans cette dernière.

**13.** Procédé d'augmentation de la concentration en analytes selon la revendication 12, **caractérisé en ce que**, préalablement à l'étape d'évaporation, on introduit la bulle (4) entre lesdites parois (11, 21) par un orifice (31) pratiqué au niveau de l'une ou l'autre desdites parois (11, 21).

**14.** Dispositif microfluidique comprenant deux parois (11, 21) entre lesquelles est située une goutte (2) d'un premier liquide entourée d'un second liquide (3) non miscible avec le premier liquide,
**caractérisé en ce qu'**il comporte des moyens de déplacement de ladite goutte (2) et/ou d'une bulle (4) présente entre lesdites parois (11, 21), lesdits moyens de déplacement étant aptes à amener ladite goutte (2) et/ou ladite bulle (4) au contact l'une de l'autre, ledit contact permettant l'évaporation de la goutte (2) dans la bulle (4).

**15.** Dispositif microfluidique selon la revendication 14, **caractérisé en ce que** les moyens de déplacement de ladite goutte (2) et/ou ladite bulle (4) sont aptes à éloigner la goutte (2) et/ou la bulle (4) l'une de l'autre de manière à arrêter l'évaporation de la goutte (2) dans la bulle (4).

**16.** Dispositif microfluidique selon la revendication 14 ou 15, **caractérisé en ce qu'**il comporte des moyens de mesure (40) du volume de la goutte (2).

**17.** Dispositif microfluidique selon l'une quelconque des revendications 14 à 16, **caractérisé en ce qu'**il comporte des moyens de chauffage (30) de la bulle (4) et éventuellement de la goutte (2), de manière à augmenter la vitesse d'évaporation lors de l'évaporation de la goutte (2) dans la bulle (4).

**18.** Dispositif microfluidique selon la revendication 17, **caractérisé en ce que** les moyens de chauffage (40) comprennent une résistance électrique disposée à proximité de la bulle (4) et éventuellement de la goutte (2), et/ou des moyens d'émission d'un rayonnement électromagnétique.

**19.** Dispositif microfluidique selon l'une quelconque des revendications 14 à 18, **caractérisé en ce que** les moyens de déplacement de ladite goutte (2) et/ou ladite bulle (4) comprennent des moyens électriques de déplacement de la goutte (2) par électromouillage ou par diélectrophorèse liquide.

**20.** Dispositif microfluidique selon l'une quelconque des revendications 14 à 18, **caractérisé en ce que** les moyens de déplacement de ladite goutte (2) et/ou ladite bulle (4) comprennent des moyens de chauffage de la bulle (4) de manière à assurer la dilatation thermique de la bulle (4).

**21.** Dispositif microfluidique selon l'une quelconque des revendications 14 à 20, **caractérisé en ce qu'**il comporte des moyens d'introduction et/ou d'évacuation de la bulle (4) au-travers de l'une ou l'autre desdites parois (11, 21).

FIG.1

FIG.2

FIG.3

FIG.4

FIG.5

FIG.6

FIG.7

FIG.8

Europäisches
Patentamt

European
Patent Office

Office européen
des brevets

## RAPPORT DE RECHERCHE EUROPEENNE

Numéro de la demande

EP 11 18 8179

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2008/245430 A1 (ADLEMAN JAMES [US] ET AL) 9 octobre 2008 (2008-10-09) | 14-21 | INV. G01N1/40 B01L3/00 |
| Y | * alinéas [0056] - [0058]; figure 5 * | 1-13 | |
| Y | WO 2010/004014 A1 (COMMISSARIAT ENERGIE ATOMIQUE [FR]; FUCHS OLIVIER [FR]; SAUTER-STARACE) 14 janvier 2010 (2010-01-14) * pages 13-19; figure 3 * | 1-13 | |
| A | US 2006/051214 A1 (USSING TOMAS [DE]) 9 mars 2006 (2006-03-09) * alinéa [0178]; figures 1-3 * | 1-21 | |
| A | US 2007/281304 A1 (GIANCHANDANI YOGESH B [US] ET AL) 6 décembre 2007 (2007-12-06) * le document en entier * | 1-21 | |
| A | WO 2007/136386 A2 (UNIV CALIFORNIA [US]; WHEELER AARON R [CA]; GARRELL ROBIN L [US]; KIM) 29 novembre 2007 (2007-11-29) * le document en entier * | 1-21 | DOMAINES TECHNIQUES RECHERCHES (IPC) |
| A,D | FR 2 887 983 A1 (COMMISSARIAT ENERGIE ATOMIQUE [FR]) 5 janvier 2007 (2007-01-05) * le document en entier * | 1-21 | G01N B01L |
| A | US 2005/079517 A1 (GONCHARKO MICHAEL [US] ET AL) 14 avril 2005 (2005-04-14) * figures 5-8 * | 1,14 | |
| A | US 2009/042319 A1 (DE GUZMAN PETER PATRICK [US] ET AL) 12 février 2009 (2009-02-12) * le document en entier * | 1,14 | |
| A | US 2003/203506 A1 (BEEBE DAVID J [US] ET AL) 30 octobre 2003 (2003-10-30) * figure 1 * | 1,14 | |

Le présent rapport a été établi pour toutes les revendications

| Lieu de la recherche | Date d'achèvement de la recherche | Examinateur |
|---|---|---|
| La Haye | 13 janvier 2012 | Cantalapiedra, Igor |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 18 8179

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-01-2012

| Document brevet cité au rapport de recherche | | | Date de publication | Membre(s) de la famille de brevet(s) | | Date de publication |
|---|---|---|---|---|---|---|
| US | 2008245430 | A1 | 09-10-2008 | US 2008245430 A1 | | 09-10-2008 |
| | | | | WO 2008094526 A2 | | 07-08-2008 |
| WO | 2010004014 | A1 | 14-01-2010 | EP 2318136 A1 | | 11-05-2011 |
| | | | | FR 2933713 A1 | | 15-01-2010 |
| | | | | US 2011147215 A1 | | 23-06-2011 |
| | | | | WO 2010004014 A1 | | 14-01-2010 |
| US | 2006051214 | A1 | 09-03-2006 | AT 403085 T | | 15-08-2008 |
| | | | | AU 2003254637 A1 | | 03-03-2004 |
| | | | | EP 1534954 A1 | | 01-06-2005 |
| | | | | JP 2005538287 A | | 15-12-2005 |
| | | | | US 2006051214 A1 | | 09-03-2006 |
| | | | | WO 2004016948 A1 | | 26-02-2004 |
| US | 2007281304 | A1 | 06-12-2007 | AUCUN | | |
| WO | 2007136386 | A2 | 29-11-2007 | AUCUN | | |
| FR | 2887983 | A1 | 05-01-2007 | AUCUN | | |
| US | 2005079517 | A1 | 14-04-2005 | US 2005079517 A1 | | 14-04-2005 |
| | | | | US 2009312198 A1 | | 17-12-2009 |
| US | 2009042319 | A1 | 12-02-2009 | CN 101252993 A | | 27-08-2008 |
| | | | | EP 1890815 A1 | | 27-02-2008 |
| | | | | US 2009042319 A1 | | 12-02-2009 |
| | | | | WO 2006138543 A1 | | 28-12-2006 |
| US | 2003203506 | A1 | 30-10-2003 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 2887983

**Littérature non-brevet citée dans la description**

• **POLLACK et al.** Electrowetting-based actuation of droplets for integrated microfluics. *Lab Chip,* 2002, vol. 2 (1), 96-101
• **BERGE.** Electrocapillarité et mouillage de films isolants par l'eau. *C.R. Acad. Sci.,* 1993, vol. 317 (2), 157-163

• **BAVIÈRE et al.** Dynamics of droplet transport induced by electrowetting actuation. *Microfluid Nanofluid,* vol. 4, 287-294